# EUROPÄISCHE PATENTSCHRIFT

(11) **EP 1 529 070 B1**
(45) Veröffentlichungstag und Bekanntmachung des Hinweises auf die Patenterteilung: **07.01.2015**
(21) Anmeldenummer: 03787789.1
(22) Anmeldetag: 13.08.2003
(51) Int. Cl.: C08F 293/00, C08L 53/00

(54) **VERWENDUNG VON BLOCKCOPOLYMEREN ALS DISPERGIERMITTEL FUR WASSERIGE FESTSTOFF-SUSPENSIONEN**
USE OF BLOCK COPOLYMERS AS DISPERSANTS FOR AQUEOUS SUSPENSIONS OF SOLIDS
UTILISATION DE COPOLYMERES SEQUENCES EN TANT QU'AGENTS DE DISPERSION POUR SUSPENSIONS AQUEUSES DE SUBSTANCES SOLIDES

(30) Priorität: 14.08.2002 DE 10237286
(43) Veröffentlichungstag der Anmeldung: 11.05.2005
(73) Patentinhaber: Construction Research & Technology GmbH, 83308 Trostberg (DE)
(72) Erfinder: KRAUS, Alexander, 83552 Evenhausen (DE); HÜBSCH, Christian, 83703 Gmund (DE); ALBRECHT, Gerhard, 83342 Tacherting (DE); GRASSL, Harald, 83471 Schönau (DE); HARTL, Angelika, 83342 Emmertsham (DE); SCHEUL, Stefanie, 83308 Trostberg (DE); KERN, Alfred, 84558 Kirchweidach (DE)
(74) Vertreter: Dey, Michael
(86) Internationale Anmeldenummer: PCT/EP2003/009005
(87) Internationale Veröffentlichungsnummer: WO 2004/016668

(56) Entgegenhaltungen:
- EP-A- 0 870 781
- EP-A- 0 979 844
- EP-A- 1 142 847
- WO-A-01/51534
- US-A- 3 932 369
- US-A- 4 029 720
- US-A- 4 927 961
- US-A- 5 177 151
- US-A- 5 484 851
- US-A- 5 707 445
- US-A- 5 763 548
- US-B1- 6 248 839

## Beschreibung

Die vorliegende Erfindung betrifft die Verwendung von Blockcopolymeren, die durch Polymerisation einer Poly(alkylenoxid)-Verbindung (A) mit einer ethylenisch ungesättigten Monomer-Verbindung (B) hergestellt wurden, als Dispergiermittel oder/und Fließmittel für wässrige Feststoff-Suspensionen auf Basis von hydraulischen Bindemitteln wie z.B. Zement, Kalk, Gips oder Anhydrit.

In wässrigen Suspensionen von pulverförmigen anorganischen oder organischen Substanzen, wie hydraulischen Bindemitteln (Zement, Kalk, Gips oder Anhydrit), Gesteinsmehl, Silikatmehl, Kreide, Tonen, Porzellanschlicker, Talkum, Pigmenten, Ruß oder Kunststoffpulvern, werden oft Zusatzmittel in Form von Dispergiermitteln zugesetzt, um ihre Verarbeitbarkeit, d.h. Knetbarkeit, Fließfähigkeit, Spritzbarkeit, Streichfähigkeit oder Pumpbarkeit, zu verbessern. Diese Zusatzmittel sind in der Lage, durch Adsorption an die Oberflächen der Teilchen Agglomerate aufzubrechen und die gebildeten Teilchen zu dispergieren. Dies führt insbesondere bei hochkonzentrierten Dispersionen zu einer deutlichen Verbesserung der Verarbeitbarkeit.

Bei der Herstellung von Baustoffmischungen, die hydraulische Bindemittel wie Zement, Kalk, Gips oder Anhydrit enthalten, lässt sich dieser Effekt besonders vorteilhaft nutzen, da zur Erzielung einer verarbeitbaren Konsistenz ansonsten wesentlich mehr Wasser benötigt würde, als für den nachfolgenden Hydratations- bzw. Erhärtungsprozess erforderlich wäre. Das nach dem Erhärten allmählich verdunstende Wasser hinterlässt Hohlräume, welche die mechanischen Festigkeiten und Beständigkeiten der Baukörper signifikant verschlechtern.

Um den im Sinne der Hydratation überschüssigen Wasseranteil zu reduzieren und/oder die Verarbeitbarkeit bei einem vorgegebenen Wasser/Bindemittel-Verhältnis zu optimieren, werden Zusatzmittel eingesetzt, die im Allgemeinen als Wasserreduktions- oder Fließmittel und im Englischen als Superplasticizer bezeichnet werden.

Die nach wie vor am häufigsten verwendeten Fließmittel sind Polykondensationprodukte auf der Basis von Naphthalin- oder Alkylnaphthalinsulfonsäuren (vgl. EP-A 214 412) sowie MelaminFormaldehyd-Harze, die Sulfonsäuregruppen enthalten (vgl. DE-PS 16 71 017).

Diese Fließmittel haben jedoch den Nachteil, dass ihre gute verflüssigende Wirkung - insbesondere im Betonbau - selbst bei relativ hohen Dosierungen nur über eine relativ kurze Zeitspanne bestehen bleibt. Dieser Abfall der Fließfähigkeit von Betonmischungen wird auch als "Slump-Loss" bezeichnet. Er führt insbesondere dann zu Problemen, wenn zwischen der Herstellung des Betons und dessen Einbau größere Zeitspannen liegen, wie sie sich oft durch lange Transport- oder Förderwege ergeben.

Weiterhin kann die Freisetzung des herstellungsbedingt enthaltenen toxischen Formaldehyds zu beträchtlichen arbeitshygienischen Belastungen führen, wenn die Anwendung im Innenbereich (Betonfertigteilherstellung oder Gipskartonplatten-Trocknung) oder im Berg- bzw. Tunnelbau erfolgt.

Um diese Nachteile zu umgehen, wurden auch formaldehydfreie Fließmittel auf der Basis Maleinsäuremonoestern und Styrol entwickelt (vgl. EP-A 306 449). Zwar kann mit diesen Zusatzmitteln eine hohe Dispergierleistung über einen ausreichenden Zeitraum (geringer Slump-Loss) gewährleistet werden, jedoch gehen diese positiven Eigenschaften bei Lagerung der wässrigen Zubereitungen dieser Fließmittel schnell verloren. Die geringe Lagerungsstabilität dieser Fließmittellösungen ist auf die leichte Hydrolysierbarkeit der Maleinsäuremonoester zurückzuführen.

Um dieses Problem zu umgehen, wurden verschiedene hydrolysestabile Fließmittel entwickelt. Bei allen diesen Fließmitteln handelt es sich um Copolymere aus ethylenisch ungesättigten Carbonsäuren (wie z.B. Acrylsäure, Methacrylsäure oder Maleinsäure bzw. deren Salze) und Poly (alkylenoxiden) mit einer polymerisierbaren Endgruppe (wie z.B. Methacrylate, Allylether oder Vinylether). Der Einbau dieser langkettigen Monomere in eine Polymerkette führt zu Polymeren mit einer kammartigen Struktur (vgl. US 5,707,445, EP 1 110 981 A2, EP 1 142 847 A2).

Diese Kammpolymere zeichnen .sich neben einer hohen Lagerbeständigkeit auch durch eine deutlich verbesserte Wirksamkeit im Vergleich zu Fließmitteln auf Lignin-, Naphthalin- oder Melaminkondensat-Basis aus.

Nach einer weithin akzeptierten Theorie beruht die Wirksamkeit der Fließmittel auf zwei unterschiedlichen Effekten. Zum einen adsorbieren die negativ geladenen Säuregruppen der Fließmittel auf der durch Calciumionen positiv geladenen Zementkornoberfläche. Die so entstehende elektrostatische Doppelschicht (Zeta Potenzial) führt zu einer elektrostatischen Abstoßung zwischen den Partikeln. Die durch die Zetapotenziale verursachten Abstoßungskräfte haben jedoch nur geringe Reichweiten (vgl. H. Uchikawa, Cement and Concrete Research 27 [1] 37-50 (1997)).

Weiterhin verhindert jedoch auch die physikalische Anwesenheit des adsorbierten Fließmittels, dass die Oberflächen der Zementpartikel in direkten Kontakt miteinander kommen können. Dieser sterische Abstoßungseffekt wird durch die nichtadsorbierten Seitenketten der oben erwähnten Kammpolymere drastisch verstärkt (vgl. K.Yoshioka, J. Am Ceram. Soc. 80 [10] 2667-71 (1997)). Es liegt auf der Hand, dass sich der sterisch bedingte Abstoßungseffekt sowohl durch die Länge der Seitenketten, als auch durch die Anzahl der Seitenketten pro Hauptkette beeinflussen lässt. Andererseits kann eine zu hohe Seitenkettendichte bzw. -länge die Adsorption auf der Zementkornoberfläche behindern. Zur Bestimmung des Adsorptionsgrades eines Fließmittels an Zementpartikel wird nach Zugabe des Fließmittels zum Anmachwasser dessen Gehalt an organischem Material bestimmt (TOC-Analyse). Nach dem Einrühren des Zements und einer kurzen Wartezeit wird der Zementleim ausgepresst und das gesammelte Porenwasser nochmals mittels TOC analysiert. Die Abnahme des TOC-Wertes entspricht nun dem Anteil des adsorbierten Fließmittels. Anhand solcher Messungen konnte gezeigt werden, dass große Teile des Fließmittels nicht adsorbieren. Dies ist nicht verwunderlich, da die Seitenketten in Lösung nicht gestreckt, sondern vermutlich eher geknäult vorliegen. Dadurch werden Carboxylatgruppen in der unmittelbaren Nachbarschaft der Seitenkette räumlich vom Zementkorn abgeschirmt und können nicht zur Adsorption beitragen. Darüber hinaus führt die Herstellung der Fließmittel über die freie radikalische Copolymersiation mehrerer verschiedener Monomere zu relativ uneinheitlichen Produkten hinsichtlich Molekulargewicht und Seitenkettendichte. Es ist daher nicht verwunderlich, dass ein Teil dieser Fließmittel nicht an der Zementkornoberfläche adsorbiert, sondern im Porenwasser gelöst verbleibt. Bei zu kurzer Hauptkette oder zu hoher Seitenkettendichte kann beispielsweise die Zahl der für die Zementkornoberfläche zugängliche Carboxylgruppen nicht ausreichen. Zu lange Hauptketten mit geringer Seitenkettendichte können hingegen Zementpartikel verbrücken und so eine Flocculation begünstigen. Vermutlich leisten diese nichtadsorbierten Anteile keinen Beitrag zum Wasserreduktionsvermögen des Fließmittels.

Wie bereits erwähnt, handelt es sich bei den polymeren Fließmitteln für zementäre Systeme nach dem derzeitigen Stand der Technik um Copolymere mit kammartiger Struktur, die über freie radikalische Polymerisation hergestellt werden. Alle diese Produkte zeichnen sich durch eine hohe Uneinheitlichkeit bezüglich der Zahl der Seitenketten pro Polymermolekül und bezüglich des Molekulargewichtes aus. Es ist jedoch bekannt, dass es für jede Anwendung und jede Zementsorte ein optimales Molekulargewicht und eine optimale Anzahl von Seitenketten pro Polymermolekül gibt. Alle Bestandteile eines Produktes, die von diesem Optimum abweichen, verringern daher die Wirksamkeit des Produktes bzw. machen höhere Dosierungen notwendig.

US 5484851, EP 0979844, US 6248839, EP 0870781 beschreiben die Verwendung von Blockcopolymeren auf Basis von Polyalkylenoxiden als Dispergiermittel.

Der vorliegenden Erfindung lag daher die Aufgabe zugrunde, Polymerverbindungen bereitzustellen, welche die genannten Nachteile des Standes der Technik nicht aufweisen, sondern aufgrund einer erhöhten Produkteinheitlichkeit und eines geringen Anteils an weniger wirksamen Komponenten eine deutlich verbesserte Wirkung als Dispergiermittel bzw. Fließmittel für wässrige Feststoff-Suspensionen aufweisen.

Diese Aufgabe wurde durch die Verwendung von Blockcopolymeren gelöst, die durch Polymerisation einer Poly(alkylenoxid)-Verbindung (A) mit mindestens einer ethylenisch ungesättigten Monomer-Verbindung (B) hergestellt wurden.

Überraschenderweise zeigen Blockcopolymere, die vorzugsweise aus nur einer Poly(oxyalkylen)kette mit einem terminal aufgepfropftem Haftblock bestehen, ein deutlich besseres Wasserreduktionsvermögen bei gleicher Dosierung als konventionelle Fließmittel auf der Basis von Kammcopolymeren. Durch Modifikation des Haftblockes lässt sich darüber hinaus auch der Slump-Loss im Vergleich zu konventionellen Fließmitteln verringern, was ebenfalls nicht vorhersehbar war.

Die erfindungsgemäß verwendeten Blockcopolymere bestehen aus mindestens zwei polymeren Bausteinen unterschiedlicher chemischer Zusammensetzung, die durch Polymerisation einer Poly(alkylenoxid)-Verbindung (A) mit einer ethylenisch ungesättigten Monomer-Verbindung (B) hergestellt wurden.

Besonders bevorzugt sind Blockcopolymere der Struktur A'-B', d.h. Blockcopolymere, die genau einen Block A' gebildet aus einer Poly (alkylenoxid)-Verbindung (A) und genau einen Block B' gebildet aus einer oder mehreren verschiedenen ethylenisch ungesättigten Monomerverbindung (B) aufweisen.

Die Herstellung der Blockcopolymere erfolgt durch Aufpfropfung an das mit dem Baustein Z substituierte Ende der Poly (alkylenoxid)-Verbindung (A), indem die Monomer-Verbindung (B) entweder radikalisch, anionisch oder kationisch aufpolymerisiert werden. Der Baustein Z übernimmt dabei die Funktion eines Polymerisationsinitiators. Bevorzugt ist hierbei die radikalische Polymerisation, insbesondere Techniken der kontrollierten bzw. lebenden radikalischen Polymerisation, da diese eine Vielzahl verschiedener funktioneller Gruppen und Lösemittel tolerieren. Als ganz besonders bevorzugt ist die Methode der "Atom Transfer Radical Polymerisation", im folgenden mit ATRP abgekürzt, anzusehen.

Die erfindungsgemäß eingesetzte Poly(alkylenoxid)-Verbindung (A) entspricht hierbei der allgemeinen Formel I 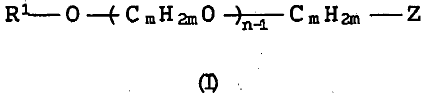 wobei R¹ folgende Bedeutung hat: Ein Wasserstoffatom, ein aliphatischer Kohlenwasserstoffrest mit 1 bis 20 C-Atomen, ein cycloaliphatischer Rest mit 5 bis 12 C-Atomen oder ein Arylrest mit 6 bis 14 C-Atomen, der gegebenenfalls noch substituiert sein kann. Für die Indices gilt: m = 2 bis 4 sowie n = 1 bis 250, wobei m bevorzugt die Werte 2 oder 3 und n bevorzugt Werte von 5 bis 250 und noch stärker bevorzugt Werte von 20 bis 135 annehmen kann.

Als bevorzugte Cycloalkylreste sind Cyclopentyl- oder Cyclohexylreste, als bevorzugte Arylreste sind Phenyl- oder Naphthylreste, die insbesondere noch durch Hydroxyl-, Carboxyl- oder Sulfonsäuregruppen substituiert sein können, anzusehen.

Der Baustein Z in Formel I kann im Rahmen der vorliegenden Erfindung folgende Bedeutungen haben: Z kann sich ableiten von 2-Halogen-Alkylcarbonsäure-Derivaten der allgemeinen Formel III:

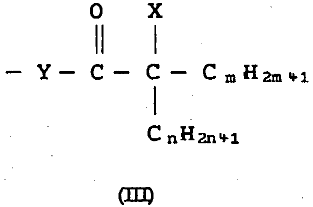

Hierbei kann X = Cl, Br oder I, m' = 1 bis 4 und n' = 0, 1 oder 2 sein, wobei m' = 1 und n' = 0 oder 1 bevorzugt werden. Y kann O oder NR² sein und R² kann für H, einen Alkylrest mit 1 bis 12 C-Atomen oder einen Arylrest mit 6 bis 14 C-Atomen sowie für -CₘH₂ₘ(O-CₘH₂ₘ )ₙ₋₁OR¹ stehen, wobei R¹, m und n vorstehend genannte Bedeutung besitzen. Besonders bevorzugt sind R² = H, CH₃ oder C₂H₅.

Z kann sich des Weiteren von den Arylsulfonylhalogenid-Derivaten gemäß Formel IV ableiten:

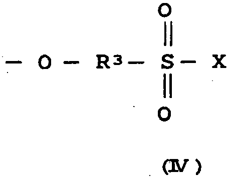

Hierbei steht X wieder für Cl oder Br, vorzugsweise Cl. R³ kann einen aromatischen Rest mit 6 bis 14 C-Atomen, vorzugsweise einen Phenyl- oder Naphthylrest bedeuten, der noch durch Halogenyl-, Hydroxyl-, C₁-C₁₂-Alkoxyl-, C₁-C₁₂-Dialkylamino- oder Carboxylgruppen substituiert sein kann.

Der Baustein Z kann im Rahmen der vorliegenden Erfindung schließlich noch für kettenübertragende Gruppen in Form von Thiolen, sekundären Aminen, Phosphinen oder Derivaten der phosphorigen Säure gemäß der allgemeinen Formel V stehen 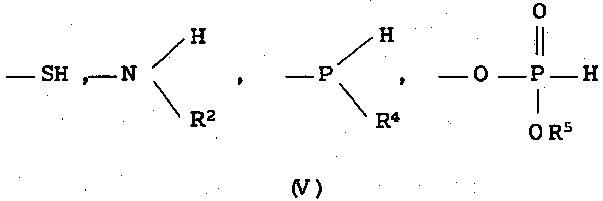 wobei R⁴ = H, C₁-C₁₂-Alkylrest, C₅-C₈-Cycloalkylrest, gegebenenfalls durch Hydroxyl-, Carboxyl- oder Sulfonsäuregruppen substituierterC₈-C₁₄-Arylrest oder 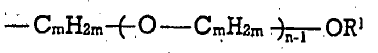 und R⁵ = C₁-C₁₂-Alkyl, C₆-C₁₄-Aryl oder 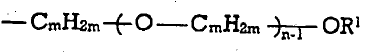 darstellen und R¹, R², m und n vorstehend genannte Bedeutung besitzen. Bevorzugte Alkylreste sind Methyl oder Ethyl, bevorzugte Cycloalkylreste sind Cyclopentyl oder Cyclohexyl und bevorzugte Arylreste sind Phenyl oder Naphthyl.

Die Herstellung der Poly(alkylenoxid)-Verbindung (A) erfolgt durch Umsetzung der Halogen-Alkylcarbonsäuren der allgemeinen Formel II oder Arylsulfonylhalogeniden der Formel III mit den entsprechenden Poly (alkylenoxid)-Derivaten (wie z. B. Monoalkylether) nach bekannten Methoden, wobei die Poly(alkylenoxid)-Verbindung (A) als Makroinitiator angesehen werden kann.

Falls Z eine kettenübertragende Gruppe darstellt, kann die Poly(alkylenoxid)-Verbindung (A) auch als makromolekularer Kettenüberträger angesehen werden, der mit der Monomer-Komponente (B) im Rahmen einer konventionellen radikalischen Polymerisation umgesetzt wird. Bei dieser Syntheseroute, die nach den bekannten Methoden durchgeführt werden kann, stellt der Baustein Z eine Gruppierung dar, die in der Lage ist, im Rahmen einer radikalischen Polymerisation als Kettenüberträger zu fungieren. Aufgrund ihrer hohen Kettenübertragungsrate werden hierbei Thiolgruppen bevorzugt verwendet. Die Synthese der entsprechenden - funktionalisierten Poly(alkylenoxide) entsprechen dem allgemeinen Stand der Technik.

Zur Herstellung der erfindungsgemäß verwendeten Blockcopolymeren wird die Poly(alkylenoxid)-Verbindung (A) mit mindestens einer ethylenisch ungesättigten Monomer-Verbindung (B) umgesetzt, die den Block B bildet. Die Bezeichnung "Block" bedeutet im Fall der erfindungsgemäß eingesetzten Blockcopolymere, dass es sich um einen Polymerbaustein handelt, der eine andere chemische Zusammensetzung als Block A hat, der sich von der Poly (alkylenoxid)-Verbindung (A) ableitet. Es kann sich bei Block B sowohl um ein Homopolymer, das nur aus einer Monomersorte aufgebaut ist, als auch um ein Copolymer, bestehend aus mehreren Monomersorten, handeln. Werden mehrere Monomersorten verwendet, können diese nach dem Stand der Technik vorzugsweise mittels ATRP entweder statistisch, blockweise oder aber blockweise mit statistischen Zwischenzonen polymerisiert werden. Auch ein gradientenartiger Aufbau entlang der Polymerkette ist möglich.

Weiterhin erlaubt die ATRP auch den Aufbau verzweigter Polymerketten. Die erfindungsgemäß verwendeten Blockcopolymere können daher einen linearen oder verzweigten Block B aufweisen. Vorzugsweise besitzen die erfindungsgemäßen Blockcopolymere einen linearen Block B, der aus einer Monomersorte aufgebaut ist, einen linearen Block B, der aus einem statistisch zusammengesetzten Copolymer besteht, oder einen verzweigten Block B, der aus einem statistisch zusammengesetzten Copolymer besteht. Als Monomer eignen sich (radikalisch) polymerisierbare ethylenisch ungesättigte Verbindungen, insbesondere Acrylate, Methacrylate und Styrolderivate der allgemeinen Formel (II): 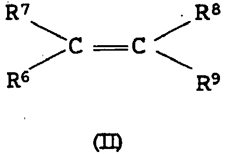 R⁶ und R⁷ können H, CH₃, COOH oder deren Salze, COOR¹⁰ oder CONR¹⁰R¹⁰ bedeuten, wobei als Carbonsäure-Salze vorzugsweise Alkali-(Natrium, Kalium), Erdalkali-(Calcium) oder Ammonium-Salze eingesetzt werden und R¹⁰ = H, C₁-C₁₂-Alkyl, C₁C₁₂-Hydroxyalkyl, 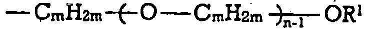 bedeuten sowie R¹, m und n vorstehend bezeichnete Bedeutung besitzen. R⁶ und R⁹ können in Formel II zusammen -O-CO-O- bedeuten, sodass sich die entsprechenden Monomere vom Maleinsäureanhydrid ableiten. R⁸ kann H, CH₃ oder CH₂-COOR¹⁰ darstellen, wobei R¹⁰ oben genannte Bedeutung besitzt. R⁹ kann für COOR¹⁰, einen gegebenenfalls substituierten C₆-C₁₄-Arylrest oder OR¹¹ stehen, wobei R¹¹ = Acetyl oder 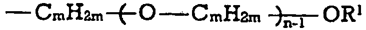 und R¹, R¹⁰, m und n oben genannte Bedeutung besitzen.

Für die erfindungsgemäß hergestellten Blockcopolymere werden vorzugsweise Monomer-Verbindungen eingesetzt, bei denen R⁶ und R⁷ = H oder R⁶ und R⁹ zusammen O-CO-O, R⁸ = H, CH₃ oder CH₂-COOR¹⁰ und R⁹ = COOR¹⁰ oder einen ggf. mit Hydroxyl-, Carboxyl- oder Sulfonsäuregruppen substituierte Phenylrest darstellt. Bevorzugt bedeuten R⁶ und R⁷ = H, R⁸ = H, CH₃ und R⁹ = COOR¹⁰ und ganz besonders bevorzugt R⁶ und R⁷ = H, R⁸ = H, CH₃, R⁹ = COOH bzw. deren Salze oder COOR¹² sowie R¹² = tert.-Butyl oder C₁-C₆-Hydroxyalkyl.

Weiterhin lassen sich gemäß einer bevorzugten Ausführungsform in den Block B der erfindungsgemäß eingesetzten Blockcopolymere gezielt Verzweigungen einführen, wenn zusätzlich zu den Monomer-Verbindungen (B) noch sogenannte Inimere mit in den Block B einpolymerisiert werden. Unter einem Inimer versteht man eine Verbindung, die sowohl eine polymersierbare ethylenisch ungesättigte Doppelbindung, als auch eine Gruppierung besitzt, die im Sinne der ATRP initiieren wirken kann. Besonders geeignete Inimere werden durch Veresterung von hydroxyfunktionalisierten Monomeren wie z.B. Hydroxyethylmethacrylat (HEMA) mit ATRP-Initiatoren wie 2-Halogenpropionsäuren oder 2-Halogenisobuttersäuren hergestellt.

Weiterhin ist es auch möglich, durch Sulfochlorierung von Styrol hergestellte Inimere bei der erfindungsgemäßen Herstellung zu verwenden.

Die Herstellung der erfindungsgemäß hergestellten Blockcopolymere erfolgt - wie bereits beschrieben - nach bekannten Methoden, wobei die radikalische Polymerisation und insbesondere die ATRP als bevorzugt anzusehen sind.

Gemäß einer bevorzugten Ausführungsform erfolgt die Umsetzung in Abhängigkeit des Lösemittels im Temperaturbereich von 20 bis 110 °C. In aprotischen Lösemitteln oder bei Bulk-Polymerisationen werden i. a. Temperaturen zwischen 50 und 110 °C, vorzugsweise zwischen 60 und 90 ° C, angewandt. In protischen Lösemitteln, insbesondere Wasser, setzt die Polymerisation u. U. schon bei 20 °C ein.

Die Mengenverhältnisse von Poly(alkylenoxid)-Verbindung (A) zu Monomer-Verbindung (B) kann in weiten Grenzen variiert werden, doch hat es sich als besonders vorteilhaft erwiesen, dieses Gewichtsverhältnis von (A) zu (B) auf 1 : 5 bis 1 : 300, insbesondere 1 : 15 bis 1 : 80, einzustellen.

Wie dem Fachmann auf dem Gebiet der ATRP bekannt ist, werden als Katalysatoren Halogenide oder Oxide von Übergangsmetallen niederer Oxidationsstufe verwendet, die durch (meist mehrzähnige) Liganden komplexiert und (zumindest teilweise) in Lösung gebracht werden. Am gebräuchlichsten sind Cu-I-Oxid, -Chlorid oder -Bromid, Fe-II-Chlorid oder Sulfat sowie Ni-II-Chlorid oder Bromid. Als Liganden werden meist 2,2'-Bipyridin (ggf. auch substituiert), Pentamethyldiethylentriamin (PMDETA), Tris(2-Dimethylaminoethyl)amin, Triphenylphosphin oder Schiffsche Basen aus 2-Pyridinaldehyd und primären Aminen verwendet. Zur Komplexierung von Cu-I-Salzen werden i.a. bei zweizähnigen Liganden zwei Mol-Äquivalente oder bei drei- bzw. vierzähnigen Liganden ein MolÄquivalent verwendet.

Erfolgt die Herstellung der erfindungsgemäß eingesetzten Blockcopolymere über die freie radikalische Polymerisation, kann auf die üblichen Azo- oder Peroxoinitiatoren zurückgegriffen werden.

Die erfindungsgemäß vorgeschlagenen Blockcopolymere eignen sich hervorragend als Fließmittel bzw. Dispergiermittel für wässrige Feststoff-Suspensionen, wobei die Blockcopolymere bevorzugt in einer Menge von 0,01 bis 5 Gew.-% bezogen auf das Gewicht der Feststoff-Suspension eingesetzt werden. Hierbei kann die Feststoff-Suspension anorganische Partikel ausgewählt aus der Gruppe Gesteinsmehl, Silikatmehl, Kreide, Tone, Porzellanschlicker, Talkum, Pigmente und Russ oder organische Partikel wie z.B. Kunststoffpulver enthalten. Die Verwendung der erfindungsgemäß vorgeschlagenen Blockcopolymere ist für wässrige Bindemittel-Suspensionen auf Basis von Zement, Kalk, Gips und Anhydrit anzusehen. Hierbei zeigen die Blockcopolymere ein deutlich besseres Wasserreduktionsvermögen bei gleicher Dosierung als konventionelle Fließmittel auf der Basis von Kammcopolymeren. Außerdem kann bei der erfindungsgemäßen Verwendung der Blockcopolymere auch ein verringerter Slump-Loss im Vergleich zu konventionellen Fließmitteln festgestellt werden.

Die nachfolgenden Beispiele sollen die Erfindung näher veranschaulichen.

### Beispiele

### A) Herstellung der Poly(alkylenoxid)-Verbindung (A) (ATRP-Makroinitiatoren) gemäß Formel I

Als Herstellungsmethode wurde die azeotrope Veresterung mit Carbonsäuren angewandt.

Hierzu wird ein Zweihalskolben mit Rührwerk, Wasserabscheider und Rückflußkühler ausgestattet. Der Kolben wird mit 0,1 mol des entsprechenden Poly(alkylenoxid)-monoalkylethers, mit 0,5 mol Bromisobuttersäure bzw. Brompropionsäure, 0,005 mol p-Toluolsulfonsäure und 50 ml Toluol befüllt. Die Reaktionsmischung wird solange unter Rühren zum Rückfluss erhitzt, bis kein Wasser mehr abgeschieden wird.

Anschließend werden 500ml Methanol zugegeben und solange unter Rühren zum Rückfluss erhitzt, bis mittels GC, HPLC oder DC keine freie Carbonsäure mehr im Reaktionsgemisch nachweisbar ist. Das überschüssige Methanol wird zusammen mit dem gebildeten Methylester der Bromisobuttersäure bzw. der Brompropionsäure destillativ entfernt. Der Destillationsrückstand besteht aus dem erwünschten ATRP-Makroinitiator. Weitere Reinigungsschritte sind im allgemeinen nicht erforderlich.

Gemäß dieser Vorschrift wurden folgende ATRP-Makroinitiatoren synthetisiert:
Ausgehend von Polyethylenglykolmonomethylethern mit den mittleren Molekulargewichten
   a) 500 g/mol der entsprechende Bromisobuttersäureester (1)
   b) 1100 g/mol der entsprechende Bromisobuttersäureester (2)
   c) 2000 g/mol der entsprechende Brompropionsäureester (3)
   d) 5000 g/mol der entsprechende Brompropionsäureester (4)

### B) Herstellung verschiedener erfindungsgemäßer Blockcopolymere nach der ATRP

Die "Atom Transfer Radical Polymerisation" erfolgte in einem Dreihalskolben, der mit gasdichtem Rührwerk, Kühler, Stickstoffeinleitung und Vakuumanschluss ausgestattet war. Als Monomer wurde *tert.-*Butylmethacrylat verwendet, das zuvor durch Filtration über ein Bett aus basischem Aluminiumoxid inhibitorfrei gemacht worden war.

Zunächst wurde der jeweilige Makroinitiator (1 bis 4) aufgeschmolzen und zusammen mit Pentamethyldiethylentriamin (PMDETA) als Komplexbildner sowie dem *tert*.-Butylmethacrylat (*t*-BMA), im Kolben vorgelegt. Die Apparatur und das Reaktionsgemisch wurden anschließend durch mehrmaliges Anlegen von Vakuum, jeweils gefolgt von Fluten mit Stickstoff, sauerstofffrei gemacht. Anschließend wurde Kupfer-I-chlorid als Katalysator zugegeben und nochmals sauerstofffrei gemacht. Die Mengen der Ausgangsmaterialien sind Tabelle 1 zu entnehmen.

Anschließend wurde das Reaktionsgemisch zwei Stunden unter Rühren auf 90 °C erhitzt. Nach zwei Stunden wurde die hochviskose Reaktionsmischung abgekühlt und Spuren von nicht umgesetztem Monomer in Vakuum abdestilliert.

Das so erhaltene erfindungsgemäße Blockcopolymer wurde in Dioxan gelöst, mit 5 g Schwefelsäure versetzt, und zwei Stunden unter Rückfluß gerührt. Hierbei kommt es unter Eliminierung von gasförmigem Isobutylen zur Spaltung der tert.-Butylestergruppen und es werden Carbonsäuregruppen gebildet. Nach dem Ende der Gasentwicklung wurde das Dioxan destillativ entfernt. Das erhaltene erfindungsgemäße Blockcopolymer wurde in der dreifachen Menge Wasser gelöst, wobei der pH-Wert mittels wässriger NaOH-Lösung auf 8 eingestellt wurde. Die genaue Feststellung des Feststoffgehaltes der Lösung erfolgte durch Verdampfung des Wassers auf einer beheizbaren Waage bei 130°C bis zur Gewichtskonstanz.

Die mittleren Molekulargewichte wurden mittels GPC ermittelt. Als mobile Phase kam dabei ein Gemisch aus 80 Vol.% wässriger 5 %iger Ammoniumformiatlösung und 20 Vol.-% Acetonitril zum Einsatz. Es wurden HEMA-Säulen als stationäre Phasen verwendet und die Kalibrierung bei RI-Detektion erfolgte mittels verschiedener Polyethylenglykolstandards. Da es sich bei den synthetisierten Polymeren um Copolymere handelt, können die über Polyethylenglykolkalibrierung ermittelten Molekulargewichte etwas von den realen Werten abweichen.

Die Stöchiometrien der jeweiligen Polymerisationsansätze sowie die mittels GPC ermittelten mittleren Molekulargewichte und Polydispersitäten sind in Tabelle 1 wiedergegeben.

**Tabelle 1: Lineare Blockcopolymere**

| Makro-initiator Nr. | Makroinitiator | | t-BMA | | CuCl | | PMDETA | | Prod | M_{w} n. Hydrolyse | Mₙ/M_{w} n. Hydrolyse |
|---|---|---|---|---|---|---|---|---|---|---|---|
| | [mol] | [g] | [mol] | [g] | [mol] | [g] | [mol] | [g] | Nr. | [g/mol] | |
| 1 | 0,046 | 30 | 0,25 | 35 | 0,046 | 4,51 | 0,046 | 8,1 | 1-1 | 1260 | 1,18 |
| 1 | 0,031 | 20 | 0,46 | 65 | 0,031 | 3,04 | 0,031 | 5,5 | 1-2 | 2150 | 1,29 |
| 1 | 0,015 | 10 | 0,46 | 65 | 0,015 | 1,47 | 0,015 | 2,6 | 1-3 | 3580 | 1,33 |
| 2 | 0,032 | 40 | 0,32 | 45 | 0,032 | 3,14 | 0,033 | 5,6 | 2-1 | 2470 | 1,32 |
| 2 | 0,024 | 30 | 0,49 | 70 | 0,024 | 2,35 | 0,024 | 4,2 | 2-2 | 4360 | 1,18 |
| 2 | 0,016 | 20 | 0,63 | 90 | 0.016 | 1,57 | 0,016 | 2,7 | 2-3 | 5100 | 1,20 |
| 3 | 0,021 | 45 | 0,21 | 30 | 0,021 | 2,06 | 0,021 | 3,7 | 3-1 | 4490 | 1,36 |
| 3 | 0,011 | 24 | 0,42 | 60 | 0,011 | 1,08 | 0,011 | 1,9 | 3-2 | 6300 | 1,24 |
| 3 | 0,0056 | 12 | 0,42 | 60 | 0,006 | 0,55 | 0,006 | 1 | 3-3 | 9280 | 1,09 |
| 4 | 0,0106 | 55 | 0,32 | 45 | 0,011 | 1,04 | 0,011 | 1,9 | 4-1 | 9160 | 1,27 |
| 4 | 0,0053 | 27 | 0,28 | 40 | 0,005 | 0,52 | 0,005 | 0,9 | 4-2 | 10660 | 1,23 |
| 4 | 0,0053 | 27 | 0,42 | 60 | 0,005 | 0,52 | 0,005 | 0,9 | 4-3 | 13530 | 1,29 |

Weiterhin wurde auch durch Einsatz eines Inimers ein erfindungsgemäßes Blockcopolymer mit einem verzweigten Polymethacrylsäureblock synthetisiert. Die Reaktionsführung erfolgte wie oben beschrieben, nur das hier zusätzlich zum Makroinitiator (2) als Inimer Hydroxyethylmethacrylatisobrombuttersäureester zugegeben wurde. Die weitere Aufarbeitung erfolgte wie oben beschrieben.

Die Stöchiometrien der jeweiligen Polymerisationsansätze sowie die mittels GPC ermittelten mittleren Molekulargewichte und Polydispersitäten sind in Tabelle 2 wiedergegeben.

**Tabelle 2: Blockcopolymere mit verzweigtem Poly (methacrylsäure)block**

| Makroinitiator | Makroinitiator | | Inimer | | t-BMA | | CuCl | | PMDETA | | Prod | M_{w} n. Hydrol. | Mₙ/M_{w} n. Hydrol. |
|---|---|---|---|---|---|---|---|---|---|---|---|---|---|
| Nr. | [mmol ] | [g] | [mmol ] | [g] | [mol] | [g ] | [mmol] | [g] | [mmol] | [g] | Nr. | [g/mol] | |
| 2 | 5 | 6,34 | 5 | 1,4 | 0,35 | 50 | 10 | 1 | 10 | 1,7 | 2-4 | 20750 | 1,29 |
| 2 | 20 | 25 | 20 | 5,6 | 0,35 | 50 | 40 | 4 | 40 | 6,9 | 2-5 | 6000 | 1,27 |

### C) Zementleimtests zur Bestimmung des Wasserreduktionsvermögens

Durch Zumischung der oben aufgeführten erfindungsgemäßen Blockcopolymere zu Zementleim wurde das Wasserreduktionsvermögen im Vergleich zum kommerziell erhältlichen Betonzusatzmittel Glenium^{®}-27 getestet. Bei Glenium^{®}-27 handelt es sich um ein statisch aufgebautes Kammpolymer aus Polymethacrylsäure mit Polyethylenglykol-Seitenketten. Die Seitenketten besitzen ein mittleres Molekulargewicht von ca. 1100 g/mol.

Zum Test des Wasserreduktionsvermögens wurde ein Zement vom Typ "Almendingen 32,5 NW-HS" mit Wasser im Verhältnis w/z = 0,32 gemischt und das jeweilige Betonzusatzmittel (Glenium^{®}-27 bzw. eines der oben beschriebenen erfindungsgemäßen Blockcopolymere) in einer Dosierung von 0,2 Gew.-% Feststoff / Zement (siehe Tabelle 3) zugegeben.

Zur Bestimmung des mini-slump-Maßes wird ein Kegelstumpf (D/d/H = 40/20/60 mm) verwendet. Mit Hilfe eines kleinen Aufsetztrichters wird der Kegelstumpf mit dem Bindemittelleim ohne Verdichtungseinwirkung gefüllt und der überstehende Leim abgestrichen. Nach Abhub des Konus wird das Fließmaß bestimmt.

In Tabelle 3 sind die Ergebnisse verschiedener Zementleim-Ausbreitversuche zusammengefasst.

**Tabelle 3: Ergebnisse Zementleim-Ausbreitversuche mit Almendingen 32,5 NW-HS**

| Betonzusatzmittel Bezeichnung | Dosierung bez. Zement [Gew.-%] | W/Z | Ausbreitmaß [cm] |
|---|---|---|---|
| ohne | 0 | 0,32 | zu steif |
| Glenium^{®}-27 | 0,2 | 0,32 | 14,8 |
| 1-1 | 0,2 | 0,32 | 9,8 |
| 1-2 | 0,2 | 0,32 | 12,3 |
| 1-3 | 0,2 | 0,32 | 14,7 |
| 2-1 | 0,2 | 0,32 | 17,5 |
| 2-2 | 0,2 | 0,32 | 16,8 |
| 2-3 | 0,2 | 0,32 | 16,5 |
| 2-4 | 0,2 | 0,32 | 17,0 |
| 2-5 | 0,2 | 0,32 | 16,9 |
| 3-1 | 0,2 | 0,32 | 17,1 |
| 3-2 | 0,2 | 0,32 | 17,6 |
| 3-3 | 0,2 | 0,32 | 16,7 |
| 4-1 | 0,2 | 0,32 | 17,8 |
| 4-2 | 0,2 | 0,32 | 17,2 |
| 4-3 | 0,2 | 0,32 | 16,3 |

Mit Ausnahme der auf (1) (Polyethylenglykolmonomethylether mit einemMolekulargewicht von 500 g/Mol) basierenden Polymere zeigen alle anderen erfindungsgemäßen Blockcopolymere eine durchweg bessere Verflüssigungswirkung im Zementleim als Glenium^{®}-27.

### D) Mörteltests zur Bestimmung des Wasserreduktionsvermögens und Erhaltung der Fließfähigkeit über einen Zeitraum von 30 min

Die Durchführung der Test erfolgte gemäß (DIN EN 1015-3).
Als Zement wurde Schelklingen CEM II 42.5 R verwendet.

**Tabelle 4: Ergebnisse der Mörtelausbreitversuche mit CEM II 42.5 R Schelklingen**

| Betonzusatzmittel Bezeichnung | Dos. | w/z | s/z | Ausbreitmaß ( cm ) | |
|---|---|---|---|---|---|
| | [Gew.-%] | [kg / kg] | [kg / kg] | 4 min | 30 min |
| Glenium^{®}-27 | 0,2 | 0,47 | 2,7 | 24,2 | 24,3 |
| 2-1 | 0,2 | 0,45 | 2,7 | 24,0 | 22,9 |
| 2-2 | 0,2 | 0,45 | 2,7 | 25,2 | 24,3 |
| 2-3 | 0,2 | 0,45 | 2,7 | 24,7 | 24,0 |
| 1-2 | 0,2 | 0,45 | 2,7 | 22,8 | 21,8 |
| 2-4 | 0,2 | 0,45 | 2,7 | 26,7 | 24,4 |
| 2-5 | 0,2 | 0,45 | 2,7 | 27,8 | 25,7 |

Die Ergebnisse zeigen deutlich, dass die erfindungsgemäß verwendeten Blockcopolymere selbst bei einem geringeren Wassergehalt /w/z = 0,45) in der Regel besser verflüssigen als Glenium® -27 bei w/z = 0,47. Die gute Verflüssigungswirkung bleibt über einen Zeitraum von mindestens 30 min nahezu unverändert erhalten.

## Patentansprüche

1. Verwendung von Blockcopolymeren, die durch Polymerisation einer Poly(alkylenoxid)-Verbindung (A) mit mindestens einer ethylenisch ungesättigten Monomer-Verbindung (B) hergestellt wurden, zum Dispergieren oder/und Verflüssigen wässriger Feststoff-Suspensionen, wobei die Feststoff-Suspension hydraulische Bindemittel auf Basis von Zement, Kalk, Gips oder Anhydrit enthält,
und wobei die Blockcopolymere durch Umsetzung einer Poly(alkylenoxid)-Verbindung (A) der allgemeinen Formel (I) 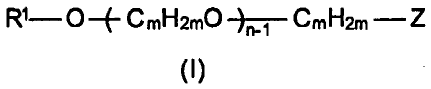 wobei
R¹ = Wasserstoff, ein C₁-C₂₀-Alkyl-Rest, ein cycloaliphatischer C₅-C₁₂-Cycloalkyl-Rest, ein ggf. substituierter C₆-C₁₄-Arylrest
m = 2 bis 4
n = 1 bis 250
Z = 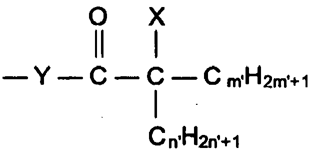 mit
Y = O, NR²
R² = H, C₁-C₁₂-Alkylrest,C₆-C₁₄-Arylrest oder 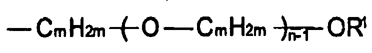
X = Cl, Br
m' = 1 bis 4
n' = 0 bis 2, 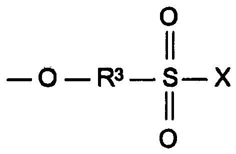 mit
R³ = ggf. substituierter C₆-C₁₄-Arylenrest
X = Cl, Br 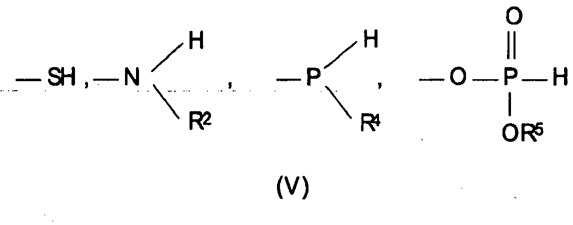
wobei R⁴ = H, C₁-C₁₂-Alkylrest, C₅-C₈-Cycloalkylrest, ggf. durch Hydroxyl-, Carboxyl- oder Sulfonsäuregruppen substituierter C₆-C₁₄-Arylrest oder -CₘH₂ₘ(O-CₘH₂ₘ)ₙ₋₁OR¹ und R⁵ = C₁-C₁₂-Alkyl, C₆-C₁₄-Aryl oder -CₘH₂ₘ-(O-CₘH₂ₘ)ₙ₋₁OR¹ darstellen und R¹, R², m und n vorstehend genannte Bedeutung besitzen,
mit einer radikalisch polymerisierbaren ethylenisch ungesättigten Monomer-Verbindung (B) der allgemeinen Formel (II) 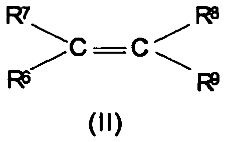 hergestellt wurden,
wobei
R⁶ und R⁷ = H, CH₃, COOH oder deren Salze, COOR¹⁰, CONR¹⁰R¹⁰
R⁶ und R⁹ zusammen O-CO-O
R⁸ = H, CH₃, -CH₂-COOR¹⁰
R⁹ = COOR¹⁰, ein ggf. substituierter C₆-C₁₄-Arylrest oder OR¹¹
R¹⁰ = H, C₁-C₁₂-Alk_{Y}1, C₁-C₁₂-Hydroxyalkyl,
R¹¹ = Acetyl,
darstellen können und
R¹, m, n, oben genannte Bedeutung besitzen.

2. Verwendung nach Anspruch 1, **dadurch gekennzeichnet, dass** die Umsetzung der Poly(alkylenoxid)-Verbindung (A) mit der Monomer-Komponente (B) in Form einer radikalischen Polymerisation durchgeführt wurde.

3. Verwendung nach Anspruch 2, **dadurch gekennzeichnet, dass** die Umsetzung in Form einer "Atom Transfer Radical Polymerisation" (ATRP) erfolgte.

4. Verwendung nach einem der Ansprüche 1 bis 3, **dadurch gekennzeichnet, dass** die Arylreste für R¹ noch durch Hydroxyl-, Carboxyl- und Sulfonsäuregruppen substituiert sind.

5. Verwendung nach einem der Ansprüche 1 bis 4, **dadurch gekennzeichnet, dass** in Formel (I) m = 2 oder 3 und n = 5 bis 250 bedeuten.

6. Verwendung nach einem der Ansprüche 1 bis 5, **dadurch gekennzeichnet, dass** R² = Wasserstoff oder C₁-C₂-Alkyl bedeutet.

7. Verwendung nach einem der Ansprüche 1 bis 6, **dadurch gekennzeichnet, dass** m' = 1 und n' = 0 oder 1 bedeuten.

8. Verwendung nach einem der Ansprüche 1 bis 7, **dadurch gekennzeichnet, dass** der Arylenrest für R³ noch Halogenyl-, Hydroxyl-, C₁-C₁₂-Alkoxy-, C₁-C₁₂-Dialkylamino- oder Carboxylgruppen aufweist.

9. Verwendung nach einem der Ansprüche 1 bis 8, **dadurch gekennzeichnet, dass** R⁶ und R⁷ für H, R⁶ und R⁹ zusammen für O-CO-O, R⁸ für H, CH₃ oder CH₂COOR¹⁰ und R⁹ für COOH¹⁰, oder für einen ggf. mit Hydroxyl-, Carboxyl- oder Sulfonsäuregruppen substituierten Phenylrest steht.

10. Verwendung nach einem der Ansprüche 1 bis 9, **dadurch gekennzeichnet, dass** R⁸ und R⁷ = H, R⁸ = H, CH₃ und R⁹ = COOR¹⁰ bedeuten.

11. Verwendung nach einem der Ansprüche 1 bis 10, **dadurch gekennzeichnet, dass** R⁶ und R⁷ = H, R⁸ = H, CH₃ und R⁹ = COOH bzw. deren Salze oder COOR¹² sowie R¹² = tert.-Butyl oder C₁-C₆-Hydroxyalkyl bedeuten.

12. Verwendung nach einem der Ansprüche 1 bis 11, **dadurch gekennzeichnet, dass** die Umsetzung der Poly(alkylenoxid)-Verbindung (A) und der Monomer-Verbindung (B) in Gegenwart einer Inimer-Verbindung durchgeführt wurde.

13. Verwendung nach Anspruch 12, **dadurch gekennzeichnet, dass** als Inimere Verbindungen eingesetzt wurden, die durch Veresterung von hydroxyfunktionalisierten Monomeren, wie z.B. Hydroxyethylmethacrylat (HEMA), mit ATRP-Initiatoren, wie z.B. Halogenpropionsäuren, hergestellt wurden.

14. Verwendung nach Anspruch 12, **dadurch gekennzeichnet, dass** als Inimere Verbindungen eingesetzt wurden, die durch Sulfochlorierung von Styrol erhalten wurden.

15. Verwendung nach einem der Ansprüche 1 bis 14, **dadurch gekennzeichnet, dass** die Umsetzung im Temperaturbereich von 20 bis 110 °C erfolgte.

16. Verwendung nach einem der Ansprüche 1 bis 15, **dadurch gekennzeichnet, dass** die Blockcopolymere in einer Menge von 0,01 bis 5 Gew.-% bezogen auf die Feststoff-Suspension eingesetzt werden.

17. Verwendung nach einem der Ansprüche 1 bis 16, **dadurch gekennzeichnet, dass** die Feststoff-Suspension anorganische Partikel ausgewählt aus der Gruppe Gesteinsmehl, Silikatmehl, Kreide, Tone, Porzellanschlicker, Talkum, Pigmente und Russ enthält.

18. Verwendung nach einem der Ansprüche 1 bis 16, **dadurch gekennzeichnet, dass** die Feststoff-Suspension organische Partikel wie z.B. Kunststoffpulver enthält.

## Claims

1. Use of block copolymers which were prepared by polymerization of a poly(alkylene oxide) compound (A) with at least one ethylenically unsaturated monomer compound (B), for dispersing and/or plasticizing aqueous suspensions of solids, the suspension of solids containing hydraulic binders based on cement, lime, gypsum or anhydrite, and the block copolymers having been prepared by reacting a poly(alkylene oxide) compound (A) of the general formula (I) 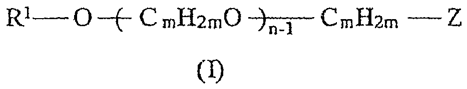 in which
R¹ = hydrogen, a C₁-C₂₀-alkyl radical, a cycloaliphatic C₅-C₁₂-cycloalkyl radical, an optionally substituted C₆-C₁₄-aryl radical m = 2 to 4
n = 1 to 250 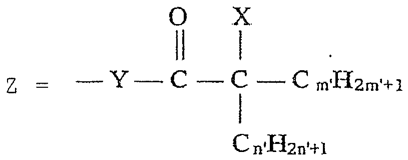 where Y = O or NR²
R² = H, a C₁-C₁₂-alkyl radical, a C₆-C₁₄-aryl radical or 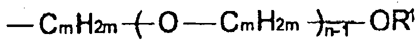 X = Cl or Br m' = 1 to 4
n' = 0 to 2, 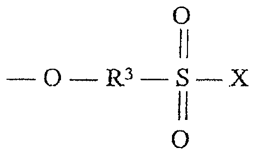 where R³ = an optionally substituted C₆-C₁₄-arylene radical
X = Cl, Br 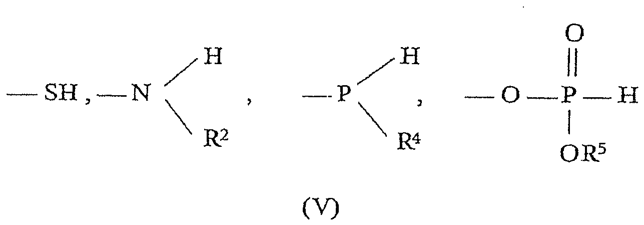 in which R⁴ is H, a C₁-C₁₂-alkyl radical, a C₅-C₈-cycloalkyl radical, a C₆-C₁₄-aryl radical, optionally substituted by hydroxyl, carboxyl or sulfo groups, or 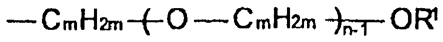 and R⁵ is C₁-C₁₂-alkyl, C₆-C₁₄-aryl or 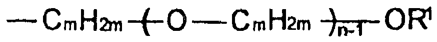 and R¹, R², m and n have the abovementioned meaning,
with an ethylenically unsaturated monomer compound (B) capable of free radical polymerization and of the general formula (II) 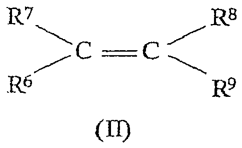 in which
R⁶ and R⁷ may be H, CH₃, COOH or salts thereof, COOR¹⁰ , CONR¹⁰R¹⁰
R⁶ and R⁹ together may be O-CO-O
R⁸ may be H, CH₃ or -CH₂-COOR¹⁰
R⁹ may be COOR¹⁰, an optionally substituted C₆-C₁₄-aryl radical or OR¹¹
R¹⁰ may be H, C₁-C₁₂-alkyl, C₁-C₁₂-hydroxyalkyl or
R¹¹ may be acetyl and
R¹, m and n have the abovementioned meaning.

2. Use according to Claim 1, **characterized in that** the reaction of the poly(alkylene oxide) compound (A) with the monomer component (B) was carried out in the form of a free radical polymerization.

3. Use according to Claim 2, **characterized in that** the reaction was effected in the form of an "atom transfer radical polymerization" (ATRP).

4. Use according to any of Claims 1 to 3, **characterized in that** the aryl radicals for R¹ are also substituted by hydroxyl, carboxyl and sulfo groups.

5. Use according to any of Claims 1 to 4, **characterized in that**, in formula (I), m is 2 or 3 and n is 5 to 250.

6. Use according to any of Claims 1 to 5, **characterized in that** R² is hydrogen or C₁-C₂-alkyl.

7. Use according to any of Claims 1 to 6, **characterized in that** m' is 1 and n' is 0 or 1.

8. Use according to any of Claims 1 to 7, **characterized in that** the arylene radical R³ also has halo, hydroxyl, C₁-C₁₂-alkoxy, C₁-C₁₂-dialkylamino or carboxyl groups.

9. Use according to any of Claims 1 to 8, **characterized in that** R⁶ and R⁷ are H, R⁶ and R⁹ together are O-CO-0, R⁸ is H, CH₃ or CH₂COOR¹⁰ and R⁹ is COOR¹⁰ or is a phenyl radical optionally substituted by hydroxyl, carboxyl or sulfo groups.

10. Use according to any of Claims 1 to 9, **characterized in that** R⁶ and R⁷ are H, R⁸ is H or CH₃ and R⁹ is COOR¹⁰.

11. Use according to any of Claims 1 to 10, **characterized in that** R⁶ and R⁷ are H, R⁸ is H or CH₃ and R⁹ is COOH or salts thereof or COOR¹² and R¹² is tert-butyl or C₁-C₆-hydroxyalkyl.

12. Use according to any of Claims 1 to 11, **characterized in that** the reaction of the poly(alkylene oxide) compound (A) and the monomer compound (B) was carried out in the presence of an inimer compound.

13. Use according to Claim 12, **characterized in that** the inimer compounds used are those which were prepared by esterification of hydroxy-functionalized monomers, such as, for example, hydroxyethyl methacrylate (HEMA), with ATRP initiators, such as, for example, halopropionic acids.

14. Use according to Claim 12, **characterized in that** the inimer compounds used were those which were obtained by sulfochlorination of styrene.

15. Use according to any of Claims 1 to 14, **characterized in that** the reaction was effected in the temperature range from 20 to 110°C.

16. Use according to any of Claims 1 to 15, **characterized in that** the block copolymers are used in an amount of from 0.01 to 5% by weight, based on the suspension of solids.

17. Use according to any of Claims 1 to 16, **characterized in that** the suspension of solids contains inorganic particles selected from the group consisting of crushed rock, silicate powder, chalk, clays, porcelain slip, talc, pigments and carbon black.

18. Use according to any of Claims 1 to 16, **characterized in that** the suspension of solids contains organic particles, such as, for example, plastics powder.

## Revendications

1. Utilisation de copolymères séquencés, qui ont été fabriqués par polymérisation d'un composé de poly(oxyde d'alkylène) (A) avec au moins un composé monomère éthyléniquement insaturé (B), pour la dispersion et/ou la liquéfaction de suspensions aqueuses de solides, la suspension de solides contenant des liants hydrauliques à base de ciment, de chaux, de gypse ou d'anhydrite, et les copolymères séquencés ayant été fabriqués par mise en réaction d'un composé de poly(oxyde d'alkylène) (A) de formule générale (I) 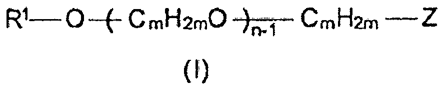 dans laquelle
R' = hydrogène, un radical alkyle en C₁-C₂₀, un radical cycloalkyle en C₅-C₁₂ cycloaliphatique, un radical aryle en C₆-C₁₄ éventuellement substitué,
m = 2 à 4,
n = 1 à 250, 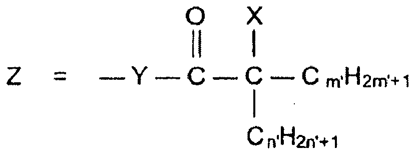 avec Y = O, NR²,
R² = H, radical alkyle en C₁-C₁₂, radical aryle en C₆-C₁₄,
ou -CₘH₂ₘ-(O-CₘH₂ₘ)ₙ₋₁-OR¹,
X = Cl, Br,
m' = 1 à 4,
n' = 0 à 2, 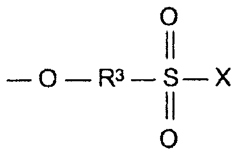 avec R³ = radical arylène en C₆-C₁₄ éventuellement substitué,
X = Cl, Br, 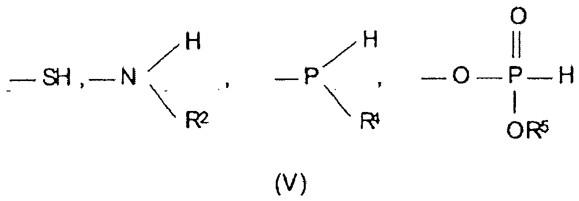 avec R⁴ = H, radical alkyle en C₁-C₁₂, radical cycloalkyle en C₅-C₈, radical aryle en C₆-C₁₄ éventuellement substitué par des groupes hydroxyle, carboxyle ou acide sulfonique, ou -CₘH₂ₘ-(O-CₘH₂ₘ)ₙ₋₁-OR¹, et R⁵ = alkyle en C₁-C₁₂, aryle en C₆-C₁₄ ou -CₘH₂ₘ-(O-CₘH₂ₘ)ₙ₋₁-OR¹, et R¹, R², m et n ayant la signification indiquée précédemment,
avec un composé monomère éthyléniquement insaturé (B) polymérisable par voie radicalaire de formule générale (II) 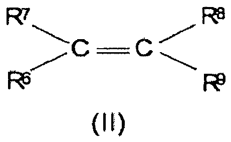 dans laquelle
R⁶ et R⁷ = H, CH₃, COOH ou ses sels, COOR¹⁰, CONR¹⁰R¹⁰,
R⁶ et R⁹ forment ensemble O-CO-O,
R⁸ = H, CH₃, -CH₂-COOR¹⁰,
R⁹ = COOR¹⁰, un radical aryle en C₆-C₁₄ éventuellement substitué ou OR¹¹,
R¹⁰ = H, alkyle en C₁-C₁₂, hydroxyalkyle en C₁-C₁₂, R¹¹ = acétyle et
R¹, m, n ont la signification indiquée précédemment.

2. Utilisation selon la revendication 1, **caractérisée en ce que** la mise en réaction du composé de poly (oxyde d'alkylène) (A) avec le composant monomère (B) a été réalisée sous la forme d'une polymérisation radicalaire.

3. Utilisation selon la revendication 2, **caractérisée en ce que** la mise en réaction a eu lieu sous la forme d'une polymérisation radicalaire par transfert d'atomes (ATRP).

4. Utilisation selon l'une quelconque des revendications 1 à 3, **caractérisée en ce que** les radicaux aryle pour R¹ sont en outre substitués par des groupes hydroxyle, carboxyle et acide sulfonique.

5. Utilisation selon l'une quelconque des revendications 1 à 4, **caractérisée en ce que** m = 2 ou 3 et n = 5 à 250 dans la formule (I).

6. Utilisation selon l'une quelconque des revendications 1 à 5, **caractérisée en ce que** R² = hydrogène ou alkyle en C₁-C₂.

7. Utilisation selon l'une quelconque des revendications 1 à 6, **caractérisée en ce que** m' = 1 et n' = 0 ou 1.

8. Utilisation selon l'une quelconque des revendications 1 à 7, **caractérisée en ce que** le radical arylène pour R³ comprend en outre des groupes halogényle, hydroxyle, alcoxy en C₁-C₁₂, dialkylamino en C₁-C₁₂ ou carboxyle.

9. Utilisation selon l'une quelconque des revendications 1 à 8, **caractérisée en ce que** R⁶ et R⁷ représentent H, R⁶ et R⁹ représentent ensemble O-CO-O, R⁸ représente H, CH₃ ou CH₂COOR¹⁰ et R⁹ représente COOR¹⁰ ou un radical phényle éventuellement substitué avec des groupes hydroxyle, carboxyle ou acide sulfonique.

10. Utilisation selon l'une quelconque des revendications 1 à 9, **caractérisée en ce que** R⁶ et R⁷ = H, R⁸ = H, CH₃ et R⁹ = COOR¹⁰.

11. Utilisation selon l'une quelconque des revendications 1 à 10, **caractérisée en ce que** R⁶ et R⁷ = H, R⁸ = H, CH₃ et R⁹ = COOH ou ses sels ou COOR¹², et R¹² = tert.-butyle ou hydroxyalkyle en C₁-C₆.

12. Utilisation selon l'une quelconque des revendications 1 à 11, **caractérisée en ce que** la mise en réaction du composé de poly(oxyde d'alkylène) (A) et du composé monomère (B) a été réalisée en présence d'un composé inimère.

13. Utilisation selon la revendication 12, **caractérisée en ce que** des composés qui ont été fabriqués par estérification de monomères à fonctionnalisation hydroxy, tels que p. ex. le méthacrylate d'hydroxyéthyle (HEMA), avec des initiateurs ATRP, tels que p. ex. des acides halogénopropioniques, ont été utilisés en tant qu'inimères.

14. Utilisation selon la revendication 12, **caractérisée en ce que** des composés obtenus par sulfochloration de styrène ont été utilisés en tant qu'inimères.

15. Utilisation selon l'une quelconque des revendications 1 à 14, **caractérisée en ce que** la mise en réaction a eu lieu dans la plage de température allant de 20 à 110 °C.

16. Utilisation selon l'une quelconque des revendications 1 à 15, **caractérisée en ce que** les copolymères séquencés sont utilisés en une quantité de 0,01 à 5 % en poids, par rapport à la suspension de solides.

17. Utilisation selon l'une quelconque des revendications 1 à 16, **caractérisée en ce que** la suspension de solides contient des particules inorganiques choisies dans le groupe constitué par la farine de pierre, la farine de silicate, la craie, les argiles, les engobes pour céramiques, le talc, les pigments et le noir de carbone.

18. Utilisation selon l'une quelconque des revendications 1 à 16, **caractérisée en ce que** la suspension de solides contient des particules organiques telles que p. ex. une poudre plastique.
